# EUROPEAN PATENT APPLICATION

(11) **EP 4 621 306 A1**
(43) Date of publication of application: **24.09.2025**
(21) Application number: 24820528.8
(22) Date of filing: 01.10.2024
(51) Int. Cl.: F24H 15/168, F24H 1/18, F24H 15/176, F24H 15/225

(54) **HOT WATER SUPPLY SYSTEM**

(30) Priority: 31.01.2024 JP 2024013165
(71) Applicant: DAIKIN INDUSTRIES, LTD., Osaka-Shi, Osaka 530-0001 (JP)
(72) Inventor: NOBORITATE, Wataru, Osaka-shi, Osaka 530-0001 (JP); OGAWA, Kouhei, Osaka-shi, Osaka 530-0001 (JP)
(74) Representative: Conti, Marco
(86) International application number: PCT/JP2024/035053
(87) International publication number: WO 2025/163970

(57) **Abstract**

There is provided a hot water supply system for enhancement of user convenience. A hot water supply system (100) includes a tank (21) and a control unit (190). The control unit (190) controls operation of a hot water supply apparatus (1) including the tank (21). The control unit (190) receives a demand response request. The control unit (190) executes boiling operation of heating hot water in the tank (21) when a heat quantity in the tank (21) becomes equal to or less than a first reference value during a second period other than a first period set in accordance with the demand response request and provided for suppression of power consumption. The control unit (190) determines whether or not to execute the boiling operation when the heat quantity in the tank (21) becomes equal to or less than the first reference value during the first period.

## Description

### TECHNICAL FIELD

The present disclosure relates to a hot water supply system.

### BACKGROUND ART

According to a conventionally known mechanism, a power supplier (electric power company) requests, to a power consumer, demand response (DR) relevant to power consumption or suppression, and the power consumer adjusts a power consumption quantity for adjustment of balance between supply and demand of electric power.

Upon receipt of a DR request for power reduction (decreasing DR request), a hot water reserving hot water supply apparatus executes planned boiling operation during a time zone other than a time zone according to the decreasing DR request, and hot water thus heated is reserved in a hot water reservoir tank. The hot water reserving hot water supply apparatus further executes boiling operation when a residual hot water quantity in the hot water reservoir tank is equal to or less than a certain reference value during the time zone other than the time zone according to the decreasing DR request.

Patent Literature 1 (JP 2019-105984 A) discloses a device control apparatus configured to change a setting condition of an air conditioner to a setting condition desired by a user during demand response control in response to a decreasing DR request. The user selects a desired setting condition from one or more setting conditions presented by the device control apparatus.

### SUMMARY OF THE INVENTION

### <Technical Problem>

The hot water reserving hot water supply apparatus executes planned boiling operation to automatically keep the residual hot water quantity in the hot water reservoir tank to have a value equal to or more than the certain reference value. The device control apparatus according to Patent Literature 1, which requires selection by the user, may thus lead to deterioration of user convenience.

The present disclosure provides a hot water supply system achieving enhancement of user convenience.

### <Solution to Problem>

A hot water supply system according to a first aspect includes a tank and a control unit. The control unit controls operation of a hot water supply apparatus including the tank. The control unit receives a demand response request. The control unit executes boiling operation of heating hot water in the tank when a heat quantity in the tank becomes equal to or less than a first reference value during a second period other than a first period set in accordance with the demand response request and provided for suppression of power consumption. The control unit determines whether or not to execute the boiling operation when the heat quantity in the tank becomes equal to or less than the first reference value during the first period.

Prohibiting the boiling operation during the first period leads to deterioration of user convenience. Such a configuration leads to enhancement of user convenience.

A hot water supply system according to a second aspect is the hot water supply system according to the first aspect, in which the heat quantity in the tank is a residual hot water quantity in the tank. The first reference value is a first hot water quantity as a predetermined hot water quantity.

A hot water supply system according to a third aspect is the hot water supply system according to the second aspect, in which, when the control unit determines to execute the boiling operation during the first period, the control unit executes the boiling operation such that the residual hot water quantity after the boiling operation becomes equal to or more than the first hot water quantity.

Such a configuration can suppress hot water shortage. This leads to enhancement of user convenience.

A hot water supply system according to a fourth aspect is the hot water supply system according to the second aspect, in which, when the control unit determines to execute the boiling operation during the first period, the control unit executes the boiling operation such that the residual hot water quantity after the boiling operation becomes equal to or more than a second hot water quantity as an expected hot water output quantity after the first period.

The boiling operation does not need to be executed again because the expected hot water output quantity is preliminarily boiled, which enhances operation efficiency of the hot water supply apparatus. Furthermore, preliminarily preparing for expected hot water output leads to enhancement of user convenience.

A hot water supply system according to a fifth aspect is the hot water supply system according to any one of the first to fourth aspects, in which the control unit does not execute the boiling operation when the heat quantity in the tank becomes equal to or less than the first reference value during the first period.

Such a configuration achieves response to a decreasing DR request.

A hot water supply system according to a sixth aspect is the hot water supply system according to the fifth aspect, in which the control unit executes the boiling operation after elapse of the first period.

Such a configuration achieves response to a decreasing DR request.

A hot water supply system according to a seventh aspect is the hot water supply system according to the fifth or sixth aspect, in which the control unit executes the boiling operation during a period after elapse of the first period until expected hot water output time, when hot water output is expected after elapse of the first period.

Such a configuration achieves response to a decreasing DR request. Furthermore, preliminarily preparing for expected hot water output leads to enhancement of user convenience.

A hot water supply system according to an eighth aspect is the hot water supply system according to any one of the fifth to seventh aspects, in which the control unit executes the boiling operation within a predetermined first time period after elapse of the first period.

Such a configuration achieves response to a decreasing DR request. Furthermore, preliminarily preparing for hot water output leads to enhancement of user convenience.

A hot water supply system according to a ninth aspect is the hot water supply system according to any one of the fifth to eighth aspects, in which the control unit does not output hot water in accordance with a hot water output command during a period after determination not to execute the boiling operation until end time of the first period.

Such a configuration achieves response to a decreasing DR request.

A hot water supply system according to a tenth aspect is the hot water supply system according to the second aspect, in which the control unit executes the boiling operation when the residual hot water quantity is equal to or less than a third hot water quantity less than the first hot water quantity.

Such a configuration can suppress hot water shortage. This leads to enhancement of user convenience.

A hot water supply system according to an eleventh aspect is the hot water supply system according to the tenth aspect, in which the control unit suppresses the boiling operation when the residual hot water quantity is more than the third hot water quantity as well as is equal to or less than the first hot water quantity.

Such a configuration can suppress power consumption as well as suppress hot water shortage. This achieves response to the decreasing DR request and leads to enhancement of user convenience.

A hot water supply system according to a twelfth aspect is the hot water supply system according to any one of the second, third, fourth, tenth, and eleventh aspects, in which the control unit determines whether or not to execute the boiling operation in accordance with a second time period from time when the residual hot water quantity becomes equal to or less than the first hot water quantity to end time of the first period.

Determining whether or not to execute the boiling operation in accordance with a time period until the end of the decreasing DR request leads to enhancement of user convenience.

A hot water supply system according to a thirteenth aspect is the hot water supply system according to the twelfth aspect, in which the control unit executes the boiling operation when the second time period is equal to or longer than a predetermined third time period.

Such a configuration leads to enhancement of user convenience.

A hot water supply system according to a fourteenth aspect is the hot water supply system according to the twelfth or thirteenth aspect, in which the control unit does not execute the boiling operation when the second time period is shorter than a predetermined third time period.

Such a configuration achieves response to a decreasing DR request.

A hot water supply system according to a fifteenth aspect is the hot water supply system according to the thirteenth or fourteenth aspect, in which the third time period is set by a user.

Such a configuration leads to enhancement of user convenience.

A hot water supply system according to a sixteenth aspect is the hot water supply system according to any one of the first to fifteenth aspects, in which the control unit controls operation of two or more of the hot water supply apparatuses. When one of hot water supply apparatuses executes the boiling operation during the first period, the control unit restricts operation of the remaining hot water supply apparatuses.

Such a configuration achieves response to a decreasing DR request.

A hot water supply system according to a seventeenth aspect is the hot water supply system according to any one of the first to sixteenth aspects, in which the control unit sets a power consumption reduction target value to a value equal to or more than a power consumption reduction average value set in accordance with the demand response request.

Such a configuration achieves response to a decreasing DR request.

A hot water supply system according to an eighteenth aspect is the hot water supply system according to any one of the first to seventeenth aspects, in which the control unit restricts a number of the hot water supply apparatuses executing the boiling operation during the first period.

Such a configuration achieves response to a decreasing DR request.

### BRIEF DESCRIPTION OF THE DRAWINGS

FIG. 1 is a schematic configuration diagram of a hot water supply system.
FIG. 2 is a functional block diagram of the hot water supply system.
FIG. 3 is a flowchart depicting a flow of boiling operation determination processing according to a first embodiment.
FIG. 4 is an explanatory view of a first hot water quantity, a second hot water quantity, and a third hot water quantity.
FIG. 5 is a flowchart depicting a flow of boiling operation determination processing according to a second embodiment.
FIG. 6 is a flowchart depicting a flow of boiling operation determination processing according to a third embodiment.
FIG. 7 is a functional block diagram of a hot water supply system according to a fourth embodiment.

### DESCRIPTION OF EMBODIMENTS

### <First embodiment>

### (1) Entire configuration

A hot water supply system 100 according to the first embodiment will be described with reference to the drawings.

The hot water supply system 100 adjusts power consumption in a commercial power grid in accordance with a demand response request (hereinafter, occasionally referred to as a DR request).

Demand response means adjustment, by a user (consumer) to be supplied with electric power in a commercial power grid, of power consumption in the commercial power grid in accordance with a request from an aggregator 90 such as an electric power company as a supplier of the electric power in the commercial power grid. The aggregator 90 pays the user reward as a compensation for demand response, in accordance with an adjusted quantity of power consumption in the commercial power grid.

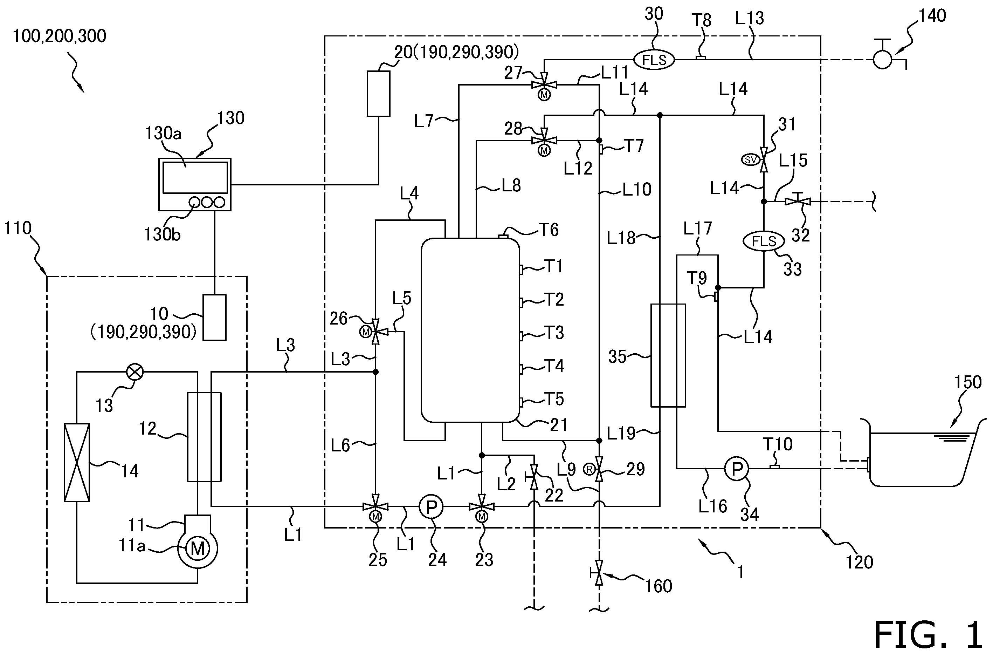

FIG. 1 is a schematic configuration diagram of the hot water supply system 100. As depicted in FIG. 1, the hot water supply system 100 principally includes a heat pump unit 110, a hot water reservoir unit 120, a remote controller 130, and a control unit 190. The hot water reservoir unit 120 is connected to a hot water supply unit 140, a bathtub 150, and a water shut off valve 160.

The heat pump unit 110 heats hot water supplied from the hot water reservoir unit 120 and supplies the hot water reservoir unit 120 with the hot water thus heated. The hot water reservoir unit 120 reserves the hot water thus heated and supplied from the heat pump unit 110, mixes the hot water being reserved and water supplied from the water shut off valve 160, and supplies the hot water supply unit 140 and the bathtub 150 with the water thus mixed. The heat pump unit 110 and the hot water reservoir unit 120 constitute a hot water supply apparatus 1 configured to boil hot water in a hot water reservoir tank (tank) 21 included in the hot water reservoir unit 120. Examples of the hot water supply unit 140 include a faucet and a shower. The water shut off valve 160 is connected to an external water supply source such as a water supply. The water shut off valve 160 is operated to supply the hot water reservoir unit 120 with water.

Herein, "hot water" means at least one of hot water or cold water. Accordingly, both water to be heated by the heat pump unit 110 and water having been heated by the heat pump unit 110 will be called hot water.

### (2) Detailed configurations

### (2-1) Heat pump unit

The heat pump unit 110 principally includes a compressor 11, a water heat exchanger 12, an expansion valve 13, and an air heat exchanger 14. The compressor 11, the water heat exchanger 12, the expansion valve 13, and the air heat exchanger 14 are connected into a ring shape via refrigerant pipes to constitute a heat pump cycle. The compressor 11 has a discharge side connected to the water heat exchanger 12, and a suction side connected to the air heat exchanger 14. The expansion valve 13 is connected to the water heat exchanger 12 at one end, and the other end is connected to the air heat exchanger 14. The heat pump unit 110 further includes a first control device 10.

The heat pump cycle allows circulation of a refrigerant having critical temperature higher than temperature of heated hot water supplied from the heat pump unit 110 to the hot water reservoir unit 120. The critical temperature of the refrigerant is preferred to be higher by 10°C or more than the temperature of the heated hot water. Examples of the refrigerant include R32 (critical temperature 78.1°C), HFO-1234yf (critical temperature 95.0°C), and R410 (critical temperature 71.4°C).

The compressor 11 includes a compression mechanism configured to compress a refrigerant when a motor 11a is driven. The refrigerant compressed by the compressor 11 is sent to the water heat exchanger 12. The heat pump unit 110 has a heating capacity adjustable through control of an operating frequency of the motor 11a.

The water heat exchanger 12 causes heat exchange between the refrigerant compressed by the compressor 11 and having high temperature and hot water supplied from the hot water reservoir unit 120 to heat the hot water. Examples of the water heat exchanger 12 include a double pipe heat exchanger including an outer pipe and an inner pipe inserted to the outer pipe. The examples of the water heat exchanger 12 may further include a plate heat exchanger. Examples of the heating capacity of the heat pump unit 110 include a quantity of heat provided by the water heat exchanger 12 to hot water supplied from the hot water reservoir unit 120 per unit time.

The expansion valve 13 decompresses the refrigerant having passed through the water heat exchanger 12 and having exchanged heat. Examples of the expansion valve 13 include an electric expansion valve. The examples of the expansion valve 13 may further include a capillary tube.

The air heat exchanger 14 causes heat exchange between the refrigerant having passed through the expansion valve 13 and having been decompressed and outdoor air to heat the refrigerant. The air heat exchanger 14 is supplied with outdoor air from an outdoor air fan or the like. The refrigerant having passed through the air heat exchanger 14 and having exchanged heat is sent to the compressor 11.

### (2-2) Hot water reservoir unit

The hot water reservoir unit 120 principally includes a hot water reservoir tank 21, a first drain valve 22, a water inlet valve 23, a boiling pump 24, a bypass valve 25, a boiling valve 26, a first mixing valve 27, a second mixing valve 28, a decompression valve 29, a first flow rate sensor 30, a hot water filling electromagnetic valve 31, a second drain valve 32, a second flow rate sensor 33, a reheat pump 34, and a reheat heat exchanger 35. These elements are connected by pipes L1 to L19 for flows of hot water. The hot water reservoir tank 21 and the pipes L10, L13, L14, and L16 are provided with temperature sensors T1 to T10. The hot water reservoir unit 120 further includes a second control device 20.

The hot water reservoir tank 21 reserves hot water. The hot water reservoir tank 21 is provided with six temperature sensors T1 to T6. The six temperature sensors T1 to T6 include a first hot water quantity temperature sensor T1, a second hot water quantity temperature sensor T2, a third hot water quantity temperature sensor T3, a fourth hot water quantity temperature sensor T4, a fifth hot water quantity temperature sensor T5, and an upper temperature sensor T6. The upper temperature sensor T6 is provided near an upper end surface of the hot water reservoir tank 21. The first to fifth hot water quantity temperature sensors T1 to T5 are disposed on a side surface of the hot water reservoir tank 21 at intervals from an upper side to a lower side.

Water has density changed in accordance with temperature. Hot water reserved in the hot water reservoir tank 21 thus forms layers having higher temperature on an upper side and having lower temperature on a lower side. A quantity of hot water (residual hot water quantity) in the hot water reservoir tank 21 can thus be acquired by detecting the temperature distribution in a vertical direction of the hot water in the hot water reservoir tank 21 in accordance with output signals from the temperature sensors T1 to T6. The number of the temperature sensors provided at the hot water reservoir tank 21 for acquisition of a residual hot water quantity in the hot water reservoir tank 21 may alternatively be any appropriate number other than six.

A water inlet pipe L1 is connected to a lower end surface of the hot water reservoir tank 21 at one end, and the other end is connected to an inlet side of the water heat exchanger 12 in the heat pump unit 110. The water inlet pipe L1 is provided with the water inlet valve 23, the boiling pump 24, and the bypass valve 25 from the hot water reservoir tank 21 toward the water heat exchanger 12. Each of the water inlet valve 23 and the bypass valve 25 is an electric three-way valve.

At a point between the hot water reservoir tank 21 and the water inlet valve 23, a first drain pipe L2 branches from the water inlet pipe L1. The first drain pipe L2 is provided with the first drain valve 22. The first drain pipe L2 is connected to a drain pipe at a point outside the hot water reservoir unit 120. The first drain valve 22 is operated to, for example, discharge hot water in the hot water reservoir tank 21 to the outside.

A hot water outlet pipe L3 is connected to an outlet side of the water heat exchanger 12 in the heat pump unit 110 at one end, and the other end is connected to the boiling valve 26. The boiling valve 26 is an electric three-way valve.

A first return pipe L4 is connected to the boiling valve 26 at one end, and the other end is connected to the upper end surface of the hot water reservoir tank 21.

A second return pipe L5 is connected to the boiling valve 26 at one end, and the other end is connected to the lower end surface of the hot water reservoir tank 21.

A bypass pipe L6 is connected to the bypass valve 25 at one end, and the other end is connected to the hot water outlet pipe L3.

A first boiling pipe L7 is connected to the upper end surface of the hot water reservoir tank 21 at one end, and the other end is connected to the first mixing valve 27. The first mixing valve 27 is an electric three-way valve.

A second boiling pipe L8 is connected to the upper end surface of the hot water reservoir tank 21 at one end, and the other end is connected to the second mixing valve 28. The second mixing valve 28 is an electric three-way valve.

A tank water supply pipe L9 is connected to the water shut off valve 160 at a point outside the hot water reservoir unit 120 at one end, and the other end is connected to the lower end surface of the hot water reservoir tank 21. The tank water supply pipe L9 is provided with the decompression valve 29. The decompression valve 29 is operated to adjust pressure (water supply pressure) of water supplied to the hot water reservoir unit 120 via the water shut off valve 160.

At a point between the decompression valve 29 and the hot water reservoir tank 21, a branching water supply pipe L10 branches from the tank water supply pipe L9. The branching water supply pipe L10 branches into a first mixed water pipe L11 and a second mixed water pipe L12. The first mixed water pipe L11 is connected to the first mixing valve 27. The second mixed water pipe L12 is connected to the second mixing valve 28. The branching water supply pipe L10 is provided with a mixed water temperature sensor T7. The mixed water temperature sensor T7 detects the temperature of hot water flowing in the branching water supply pipe L10.

A first hot water supply pipe L13 is connected to the first mixing valve 27 at one end, and the other end is connected to the hot water supply unit 140. The first hot water supply pipe L13 is provided with the first flow rate sensor 30. The first flow rate sensor 30 detects a flow rate of hot water in the first hot water supply pipe L13. At a point between the first flow rate sensor 30 and the hot water supply unit 140, the first hot water supply pipe L13 is provided with a first hot water supply temperature sensor T8. The first hot water supply temperature sensor T8 detects the temperature of hot water flowing in the first hot water supply pipe L13.

A second hot water supply pipe L14 is connected to the second mixing valve 28 at one end, and the other end is connected to the bathtub 150. The second hot water supply pipe L14 is provided with the hot water filling electromagnetic valve 31 and the second flow rate sensor 33 from the second mixing valve 28 toward the bathtub 150. The second flow rate sensor 33 detects a flow rate of hot water in the second hot water supply pipe L14.

At a point between the hot water filling electromagnetic valve 31 and the second flow rate sensor 33, a second drain pipe L15 branches from the second hot water supply pipe L14. The second drain pipe L15 is provided with the second drain valve 32. The second drain pipe L15 is connected to a drain pipe at a point outside the hot water reservoir unit 120. The second drain valve 32 is operated to, for example, discharge a part of hot water flowing in the second hot water supply pipe L14 to the outside in order to adjust a quantity of hot water flowing in the second hot water supply pipe L14.

A first bathtub return pipe L16 is connected to the bathtub 150 at one end, and the other end is connected to an inlet side of the reheat heat exchanger 35. The first bathtub return pipe L16 is provided with the reheat pump 34. At a point between the bathtub 150 and the reheat pump 34, the first bathtub return pipe L16 is provided with a bathtub return temperature sensor T10. The bathtub return temperature sensor T10 detects the temperature of hot water flowing in the first bathtub return pipe L16.

A second bathtub return pipe L17 is connected to an outlet side of the reheat heat exchanger 35 at one end, and the other end is connected to the second hot water supply pipe L14 at a point between the second flow rate sensor 33 and the bathtub 150. At a point between a connection point of the second bathtub return pipe L17 with the second hot water supply pipe L14 and the bathtub 150, the second hot water supply pipe L14 is provided with a second hot water supply temperature sensor T9. The second hot water supply temperature sensor T9 detects the temperature of hot water flowing in the second hot water supply pipe L14.

At a point between the second mixing valve 28 and the hot water filling electromagnetic valve 31, a first reheat pipe L18 branches from the second hot water supply pipe L14. The first reheat pipe L18 is connected to the inlet side of the reheat heat exchanger 35.

A second reheat pipe L19 is connected to the outlet side of the reheat heat exchanger 35 at one end, and the other end is connected to the water inlet valve 23.

### (2-3) Remote controller

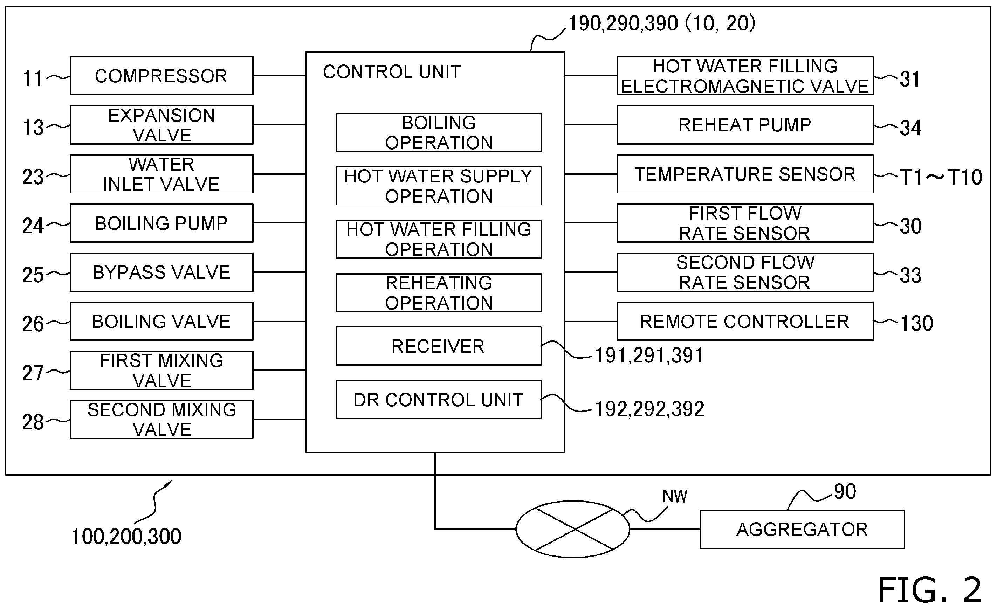

The remote controller 130 is a user interface for control of the hot water supply apparatus 1. The remote controller 130 is installed in a kitchen, a bathroom, or the like. As depicted in FIG. 2, the remote controller 130 is connected to the first control device 10 and the second control device 20 so as to be interactively data communicable by wireless communication or wired communication. Each of the first control device 10 and the second control device 20 receives a signal or the like commanding operation of the hot water supply apparatus 1 from the remote controller 130 by wireless communication or wired communication. Examples of the user interface for the hot water supply apparatus 1 may include, in addition to the remote controller 130, a mobile information terminal such as a smartphone.

The remote controller 130 includes a display unit 130a and an operation unit 130b. Examples of the display unit 130a include a liquid crystal display and an organic EL display.

The display unit 130a displays information on a state of the hot water supply apparatus 1, information on a setting of the hot water supply apparatus 1, and the like. The display unit 130a displays a set value of temperature of hot water (hot water supply temperature) supplied to the hot water supply unit 140 and the bathtub 150, a residual hot water quantity in the hot water reservoir tank 21, and the like.

The operation unit 130b includes a button, a dial, a key, and the like to be operated by the user of the hot water supply apparatus 1. The user of the hot water supply apparatus 1 operates the operation unit 130b to input information on the set value of hot water supply temperature, and the like. Examples of the display unit 130a may include a touch screen also functioning as the operation unit 130b.

The remote controller 130 may further include a speaker, a microphone, and the like. In this case, the remote controller 130 may notify of the information displayed on the display unit 130a by means of the speaker, and may acquire the information input through the operation unit 130b by means of the microphone.

### (2-4) control unit

The control unit 190 principally comprises the first control device 10 in the heat pump unit 110 and the second control device 20 in the hot water reservoir unit 120. Each of the first control device 10 and the second control device 20 typically comprises a microcomputer including a control arithmetic device and a storage device, and an input-output circuit. The control arithmetic device is a processor such as a CPU or a GPU. The control arithmetic device reads a control program stored in the storage device, and controls operation of the hot water supply apparatus 1 in accordance with the control program. The control arithmetic device is further configured to write an arithmetic result to the storage device and read information stored in the storage device in accordance with the control program.

The control unit 190 is not limited to the above in terms of its configuration. For example, the first control device 10 and the second control device 20 may interactively communicate to operate cooperatively. Instead of including the first control device 10 and the second control device 20, the control unit 190 may include a device having functions of both the first control device 10 and the second control device 20 and provided in any one of the heat pump unit 110 and the hot water reservoir unit 120. Such a device may be disposed outside the hot water supply apparatus 1 and may be connected to the heat pump unit 110 and the hot water reservoir unit 120 via a network.

FIG. 2 is a functional block diagram of the hot water supply system 100. As depicted in FIG. 2, the control unit 190 controls the compressor 11, the expansion valve 13, the water inlet valve 23, the boiling pump 24, the bypass valve 25, the boiling valve 26, the first mixing valve 27, the second mixing valve 28, the hot water filling electromagnetic valve 31, the reheat pump 34, and the like in accordance with signals from the temperature sensors T1 to T10, the first flow rate sensor 30, and the second flow rate sensor 33. The control unit 190 is communicably connected to the aggregator 90 via a network NW.

The control unit 190 principally executes boiling operation, hot water supply operation, hot water filling operation, and reheating operation. The control unit 190 includes, as a functional block, a receiver 191 and a DR control unit 192.

### (2-4-1) Boiling operation

Boiling operation includes heating hot water in the hot water reservoir tank 21 by means of the heat pump unit 110. During boiling operation, the boiling pump 24 is driven to guide hot water in the hot water reservoir tank 21 into the water heat exchanger 12 through the water inlet pipe L1 so as to be heated. The hot water heated in the water heat exchanger 12 is returned into the hot water reservoir tank 21 through the hot water outlet pipe L3, the first return pipe L4, and the second return pipe L5. In this manner, boiling operation includes heating, in the water heat exchanger 12, hot water in the hot water reservoir tank 21 while circulating the hot water through the water inlet pipe L1, the hot water outlet pipe L3, the first return pipe L4, and the second return pipe L5.

The control unit 190 executes boiling operation by controlling the compressor 11, the expansion valve 13, the water inlet valve 23, the boiling pump 24, the bypass valve 25, and the boiling valve 26. The control unit 190 controls the operating frequency of the motor 11a for the compressor 11 and an opening degree of the expansion valve 13 to adjust a heating capacity of the heat pump unit 110, temperature of hot water (hot water output temperature) heated in the water heat exchanger 12, and the like. The control unit 190 controls a number of revolutions of the boiling pump 24 to adjust hot water output temperature, a residual hot water quantity in the hot water reservoir tank 21, a flow rate of hot water (reserved flow rate) supplied into the hot water reservoir tank 21, and the like.

During ordinary boiling operation of circulating hot water in the hot water reservoir tank 21, the control unit 190 controls the water inlet valve 23 to prevent the water inlet pipe L1 from communicating with the second reheat pipe L19, and controls the bypass valve 25 to prevent the water inlet pipe L1 from communicating with the bypass pipe L6. As to be described later, the control unit 190 controls the water inlet valve 23 for execution of reheating operation.

The control unit 190 is configured to control the bypass valve 25 to switch between a state where hot water flowing in the water inlet pipe L1 passes through the water heat exchanger 12 and is supplied into the hot water outlet pipe L3 and a state where hot water flowing in the water inlet pipe L1 bypasses the water heat exchanger 12 and is supplied into the hot water outlet pipe L3. In the state of bypassing the water heat exchanger 12, the water inlet pipe L1 communicates with the bypass pipe L6 and hot water in the hot water reservoir tank 21 circulates without being heated in the water heat exchanger 12.

The control unit 190 is configured to control the boiling valve 26 to switch between a state where hot water is supplied from the water heat exchanger 12 into the hot water reservoir tank 21 through the first return pipe L4, and a state where hot water is supplied from the water heat exchanger 12 into the hot water reservoir tank 21 through the second return pipe L5.

The control unit 190 may acquire hot water output temperature, a residual hot water quantity, and a reserved flow rate in accordance with the operating frequency of the motor 11a for the compressor 11, the opening degree of the expansion valve 13, the number of revolutions of the boiling pump 24, states of the bypass valve 25 and the boiling valve 26, output signals from the temperature sensors T1 to T6 at the hot water reservoir tank 21, and the like.

The control unit 190 may feedback control the operating frequency of the motor 11a for the compressor 11, the opening degree of the expansion valve 13, the number of revolutions of the boiling pump 24, and the states of the bypass valve 25 and the boiling valve 26 such that the hot water output temperature, the residual hot water quantity, and the reserved flow rate reach predetermined target values.

The control unit 190 executes boiling operation with use of the electric power in the commercial power grid. A time zone for execution of boiling operation may be set through operation of the remote controller 130 by the user of the hot water supply apparatus 1.

The control unit 190 executes boiling operation when a heat quantity in the hot water reservoir tank 21 becomes equal to or less than a first reference value. The heat quantity in the hot water reservoir tank 21 is a residual hot water quantity in the hot water reservoir tank 21 in the present embodiment. The first reference value is a first hot water quantity W1 as a predetermined hot water quantity.

A single user typically uses 50 liters of hot water via a faucet or a shower for bathing. The residual hot water quantity less than 50 liters will highly possibly cause hot water shortage during bathing. Accordingly, the predetermined first hot water quantity W1 is exemplarily 50 liters.

### (2-4-2) Hot water supply operation

Hot water supply operation includes outputting hot water in the hot water reservoir tank 21 from the hot water supply unit 140. In a case where the hot water supply unit 140 is a faucet, during hot water supply operation, the faucet is opened to supply external water from a bottom of the hot water reservoir tank 21 into the hot water reservoir tank 21 through the tank water supply pipe L9 due to water supply pressure. Accordingly, hot water having high temperature and reserved in the hot water reservoir tank 21 is pushed out of a top of the hot water reservoir tank 21 through the first boiling pipe L7.

Subsequently, the hot water having high temperature is supplied from the hot water reservoir tank 21 to the first mixing valve 27 through the first boiling pipe L7, and the external water is supplied to the first mixing valve 27 through the tank water supply pipe L9, the branching water supply pipe L10, and the first mixed water pipe L11. At the first mixing valve 27, the hot water having high temperature from the first boiling pipe L7 is mixed with the water from the first mixed water pipe L11. Hot water thus obtained by mixing is output from the hot water supply unit 140 through the first hot water supply pipe L13.

When the user opens the hot water supply unit 140 and the first flow rate sensor 30 detects an increase in the flow rate of hot water in the first hot water supply pipe L13, the control unit 190 starts hot water supply operation. During hot water supply operation, the control unit 190 controls the first mixing valve 27 in accordance with temperature of hot water output from the hot water supply unit 140. The control unit 190 may adopt temperature detected by the first hot water supply temperature sensor T8 as the temperature of the hot water output from the hot water supply unit 140.

The control unit 190 may feedback control a mixture ratio between hot water having high temperature and water at the first mixing valve 27 in accordance with output signals from the mixed water temperature sensor T7 and the first hot water supply temperature sensor T8, and the like, such that the temperature of the hot water output from the hot water supply unit 140 reaches a predetermined target value.

A past time zone for execution of hot water supply operation and a used hot water quantity are accumulated in the storage device as hot water output history information or the like.

### (2-4-3) Hot water filling operation

Hot water filling operation includes supplying the bathtub 150 with hot water in the hot water reservoir tank 21. During hot water filling operation, the hot water filling electromagnetic valve 31 is opened to supply external water from the bottom the hot water reservoir tank 21 into the hot water reservoir tank 21 through the tank water supply pipe L9 due to water supply pressure. Accordingly, hot water having high temperature and reserved in the hot water reservoir tank 21 is pushed out of the top of the hot water reservoir tank 21 through the second boiling pipe L8.

Subsequently, the hot water having high temperature is supplied from the hot water reservoir tank 21 to the second mixing valve 28 through the second boiling pipe L8, and the external water is supplied to the second mixing valve 28 through the tank water supply pipe L9, the branching water supply pipe L10, and the second mixed water pipe L12. At the second mixing valve 28, the hot water having high temperature from the second boiling pipe L8 is mixed with the water from the second mixed water pipe L12. Hot water thus obtained by mixing is supplied into the bathtub 150 through the second hot water supply pipe L14.

The control unit 190 opens the hot water filling electromagnetic valve 31 upon receipt of a start signal for hot water filling operation by user operation of the remote controller 130, and starts hot water filling operation when the second flow rate sensor 33 detects an increase in the flow rate of hot water in the second hot water supply pipe L14. During hot water filling operation, the control unit 190 controls the second mixing valve 28 in accordance with temperature of hot water supplied into the bathtub 150. The control unit 190 may adopt temperature detected by the second hot water supply temperature sensor T9 as the temperature of the hot water supplied into the bathtub 150.

The control unit 190 may feedback control a mixture ratio between hot water having high temperature and water at the second mixing valve 28 in accordance with output signals from the mixed water temperature sensor T7 and the second hot water supply temperature sensor T9, and the like, such that the temperature of the hot water supplied into the bathtub 150 reaches a predetermined target value.

During hot water filling operation, the control unit 190 may close the hot water filling electromagnetic valve 31 to end hot water filling operation upon receipt of an end signal for hot water filling operation by user operation of the remote controller 130 or when a water level in the bathtub 150 detected by a water level sensor (not depicted) provided at the bathtub 150 reaches a predetermined target value.

A time zone for execution of hot water filling operation may be set through operation of the remote controller 130 by the user of the hot water supply apparatus 1. The time zone for execution of hot water filling operation and a hot water quantity to be used are accumulated in the storage device as expected hot water output information or the like.

### (2-4-4) Reheating operation

Reheating operation includes heating, in the reheat heat exchanger 35, hot water in the bathtub 150 and returning the hot water thus heated into the bathtub 150. When the reheat pump 34 is driven during reheating operation, part of the hot water in the bathtub 150 is guided into the reheat heat exchanger 35 through the first bathtub return pipe L16 to be heated. The hot water heated in the reheat heat exchanger 35 is returned into the bathtub 150 through the second bathtub return pipe L17 and the second hot water supply pipe L14. In this manner, reheating operation includes heating, in the reheat heat exchanger 35, hot water in the bathtub 150 while circulating the hot water through the first bathtub return pipe L16, the second bathtub return pipe L17, and the second hot water supply pipe L14.

The reheat heat exchanger 35 causes heat exchange between hot water having high temperature and supplied from the hot water reservoir tank 21 through the second hot water supply pipe L14 and the first reheat pipe L18, and hot water having low temperature and supplied from the bathtub 150 through the first bathtub return pipe L16. The reheat heat exchanger 35 accordingly heats the hot water supplied from the bathtub 150 through the first bathtub return pipe L16. The hot water having high temperature and supplied to the reheat heat exchanger 35 through the first reheat pipe L18 exchanges heat and is then supplied to the water inlet pipe L1 through the second reheat pipe L19 and via the water inlet valve 23. Examples of the reheat heat exchanger 35 may include a counterflow heat exchanger configured to cause heat exchange between hot water having high temperature and hot water having low temperature flowing in opposite directions.

Upon receipt of a start signal for reheating operation by user operation of the remote controller 130, the control unit 190 controls the water inlet valve 23 to cause the water inlet pipe L1 and the second reheat pipe L19 to communicate with each other, drives the boiling pump 24 and the reheat pump 34, and starts reheating operation. During reheating operation, the control unit 190 controls numbers of revolutions of the boiling pump 24 and the reheat pump 34 in accordance with temperature of the hot water in the bathtub 150 and temperature of the hot water returned from the reheat heat exchanger 35 into the bathtub 150. The control unit 190 may adopt temperature detected by the bathtub return temperature sensor T10 as the temperature of the hot water in the bathtub 150, and temperature detected by the second hot water supply temperature sensor T9 as the temperature of the hot water returned from the reheat heat exchanger 35 into the bathtub 150.

The control unit 190 may feedback control the numbers of revolutions of the boiling pump 24 and the reheat pump 34 in accordance with output signals from the second hot water supply temperature sensor T9 and the bathtub return temperature sensor T10, and the like, such that the temperature of the hot water in the bathtub 150 reaches a predetermined target value.

During reheating operation, the control unit 190 may control the water inlet valve 23 to prevent the second reheat pipe L19 from communicating with the water inlet pipe L1 and may stop the reheat pump 34 to end reheating operation upon receipt of an end signal for reheating operation by user operation of the remote controller 130 or when the temperature of the hot water in the bathtub 150 reaches the predetermined target value.

A past time zone for execution of reheating operation and a used hot water quantity are accumulated in the storage device as hot water output history information or the like.

### (2-4-5) Receiver

The receiver 191 receives a DR request from the aggregator 90 via the network NW. The DR request includes a decreasing DR request and an increasing DR request.

The decreasing DR request corresponds to a request to decrease power consumption of the hot water supply apparatus 1 during a first period in comparison to an ordinary level. The aggregator 90 issues the decreasing DR request to the control unit 190 before the first period while the electric power in the commercial power grid is predicted to be tight.

The increasing DR request corresponds to a request to increase power consumption of the hot water supply apparatus 1 during a second period in comparison to the ordinary level. The aggregator 90 issues the increasing DR request to the control unit 190 before the second period while the electric power in the commercial power grid is predicted to be in excess.

Each of the decreasing DR request and the increasing DR request may include a target value relevant to power consumption.

### (2-4-6) DR control unit

The DR control unit 192 controls not to execute boiling operation during the first period. However, if the DR control unit 192 determines to execute boiling operation as to be described later, boiling operation is executed.

The DR control unit 192 determines whether or not to execute boiling operation when the residual hot water quantity becomes equal to or less than the first hot water quantity W1 during the first period. The first hot water quantity W1 is preliminarily stored in the storage device. The first hot water quantity W1 may be set by user operation of the remote controller 130.

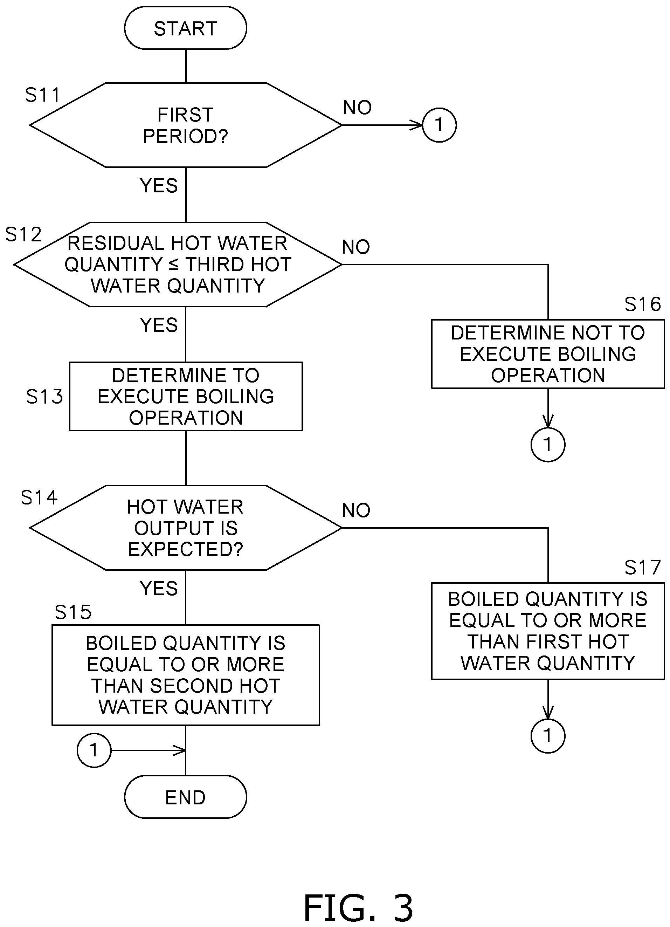

When the residual hot water quantity becomes equal to or less than the first hot water quantity W1, the DR control unit 192 determines whether or not to execute boiling operation in accordance with the residual hot water quantity as depicted in a flowchart in FIG. 3.

When the residual hot water quantity becomes equal to or less than the first hot water quantity W1, the DR control unit 192 determines whether or not the first period is ongoing (step S11). If the first period is not ongoing (NO in step S11), the DR control unit 192 does not determine whether or not to execute boiling operation. In this case, the control unit 190 ordinarily executes boiling operation.

If the first period is ongoing (YES in step S11), the DR control unit 192 determines whether or not the residual hot water quantity is equal to or less than third hot water quantity W3 (step S12). The third hot water quantity W3 is a hot water quantity less than the first hot water quantity W1 and is exemplarily 15 liters. When the residual hot water quantity is equal to or less than the third hot water quantity W3, hot water shortage occurs highly possibly.

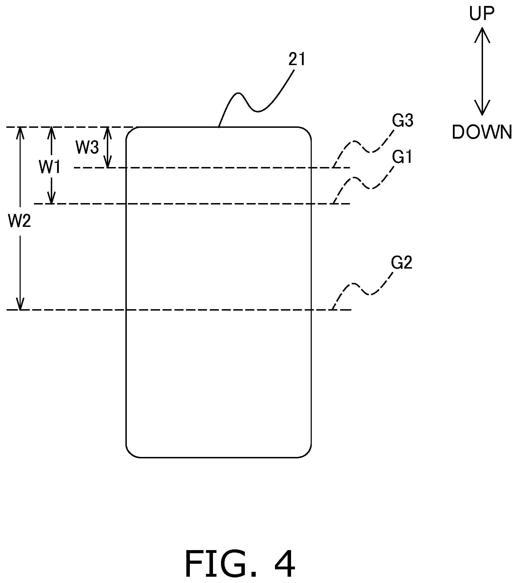

FIG. 4 is an explanatory view of the first hot water quantity W1, a second hot water quantity W2, and the third hot water quantity W3. Hot water in the hot water reservoir tank 21 is boiled from the top of the hot water reservoir tank 21 toward the bottom of the hot water reservoir tank 21. As depicted in FIG. 4, the first hot water quantity W1 corresponds to a quantity of hot water positioned above broken line G1. The third hot water quantity W3 is a hot water quantity less than the first hot water quantity W1 and corresponds to a quantity of hot water positioned above broken line G3.

If the residual hot water quantity is more than the third hot water quantity W3 (NO in step S12), the DR control unit 192 determines not to execute boiling operation (step S16).

If the residual hot water quantity is equal to or less than the third hot water quantity W3 (YES in step S12), the DR control unit 192 determines to execute boiling operation (step S13).

The DR control unit 192 determines whether or not hot water output is expected after the first period in accordance with the past time zone for execution of hot water supply operation, the past time zone for execution of reheating operation, and the hot water output history information on a used hot water quantity (step S14). The DR control unit 192 further determines whether or not hot water output is expected after the first period in accordance with the time zone for execution of hot water filling operation and the expected hot water output information on a hot water quantity to be used (step S14). Time after the first period is within predetermined fourth time period from end time of the first period.

When the DR control unit 192 determines that hot water output is expected after the first period (YES in step S14), the DR control unit 192 determines to boil hot water having a quantity equal to or more than the second hot water quantity W2 during boiling operation (step S15). The second hot water quantity W2 is a quantity of hot water (expected hot water output quantity) expected to be output after the first period. The DR control unit 192 calculates the second hot water quantity W2 in accordance with the hot water output history information and the expected hot water output information. As depicted in FIG. 4, the second hot water quantity W2 corresponds to a quantity of hot water positioned above broken line G2. In other words, if the residual hot water quantity is equal to or less than the third hot water quantity W3 and hot water output is expected after the first period, the DR control unit 192 determines to boil hot water having a quantity equal to or more than the expected hot water output quantity during boiling operation.

When the DR control unit 192 determines that hot water output is not expected after the first period (NO in step S14), the DR control unit 192 determines to boil hot water having a quantity equal to or more than the first hot water quantity W1 during boiling operation (step S17). In other words, if the residual hot water quantity is equal to or less than the third hot water quantity W3 and hot water output is not expected after the first period, the DR control unit 192 determines to boil hot water having a quantity equal to or more than the first hot water quantity W1 during boiling operation.

### (3) Characteristics

(3-1)
There has been conventionally known the device control apparatus configured to change the setting condition of the air conditioner to the setting condition desired by the user during demand response control in response to the decreasing DR request. The user selects a desired setting condition from one or more setting conditions presented by the device control apparatus.

However, the hot water reserving hot water supply apparatus executes planned boiling operation to automatically keep the residual hot water quantity in the hot water reservoir tank to have a value equal to or more than the certain reference value. The device control apparatus according to Patent Literature 1, which requires selection by the user, may thus lead to deterioration of user convenience.

The hot water supply system 100 according to the present embodiment includes the hot water reservoir tank 21 and the control unit 190. The control unit 190 controls operation of the hot water supply apparatus 1 including the hot water reservoir tank 21. The control unit 190 receives the demand response request. The control unit 190 executes boiling operation of heating hot water in the hot water reservoir tank 21 when the heat quantity in the hot water reservoir tank 21 becomes equal to or less than the first reference value during the second period other than the first period set in accordance with the demand response request and provided for suppression of power consumption. The control unit 190 determines whether or not to execute boiling operation when the heat quantity in the hot water reservoir tank 21 becomes equal to or less than the first reference value during the first period.

Prohibiting the boiling operation during the first period leads to deterioration of user convenience. Such a configuration leads to enhancement of user convenience.

(3-2)
In the hot water supply system 100 according to the present embodiment, the heat quantity in the hot water reservoir tank 21 is the residual hot water quantity in the hot water reservoir tank 21. The first reference value is the first hot water quantity W1 as a predetermined hot water quantity.

(3-3)
In the hot water supply system 100 according to the present embodiment, when the control unit 190 determines to execute boiling operation during the first period, the control unit 190 executes boiling operation such that the residual hot water quantity after boiling operation becomes equal to or more than the first hot water quantity W1.

Such a configuration can suppress hot water shortage. This leads to enhancement of user convenience.

(3-4)
In the hot water supply system 100 according to the present embodiment, when the control unit 190 determines to execute boiling operation during the first period, the control unit 190 executes boiling operation such that the residual hot water quantity after boiling operation becomes equal to or more than the second hot water quantity W2 as an expected hot water output quantity after the first period.

Boiling operation does not need to be executed again because the expected hot water output quantity is preliminarily boiled, which enhances operation efficiency of the hot water supply apparatus 1. Furthermore, preliminarily preparing for expected hot water output leads to enhancement of user convenience.

(3-5)
In the hot water supply system 100 according to the present embodiment, the control unit 190 executes boiling operation when the residual hot water quantity is equal to or less than the third hot water quantity W3 less than the first hot water quantity W1.

Such a configuration can suppress hot water shortage. This leads to enhancement of user convenience.

### (4) Modification examples

### (4-1) Modification example 1A

If the residual hot water quantity is more than the third hot water quantity W3 and is equal to or less than the first hot water quantity W1, the DR control unit 192 determines not to execute boiling operation in the present embodiment. Alternatively, if the residual hot water quantity is more than the third hot water quantity W3 and is equal to or less than the first hot water quantity W1, the DR control unit 192 may determine to execute boiling operation. Specifically, the DR control unit 192 may determine to execute boiling operation with a heating capacity less than a standard heating capacity. The standard heating capacity corresponds to a heating capacity for ordinary boiling operation, and indicates a heating capacity with normal rated power utilizing commercial power (the maximum value of electric power usable in a continuously operating state at specified ambient temperature).

Such a configuration can suppress power consumption as well as suppress hot water shortage. This achieves response to the decreasing DR request and leads to enhancement of user convenience.

### (4-2) Modification example 1B

If the residual hot water quantity is equal to or less than the third hot water quantity W3, the DR control unit 192 determines to execute boiling operation in the present embodiment. Alternatively, the DR control unit 192 may determine to execute boiling operation if the residual hot water quantity is equal to or less than the first hot water quantity W1.

Such a configuration can suppress hot water shortage. This leads to enhancement of user convenience.

### (4-3) Modification example 1C

The heat quantity in the hot water reservoir tank 21 is the residual hot water quantity in the hot water reservoir tank 21 in the present embodiment. The first reference value is first hot water quantity W1 as predetermined hot water quantity. Alternatively, the heat quantity in the hot water reservoir tank 21 may be temperature of hot water obtained by a predetermined one of the temperature sensors T1 to T6 provided at the hot water reservoir tank 21. The first reference value may alternatively be predetermined temperature.

### <Second embodiment>

A hot water supply system 200 according to the second embodiment will be described with reference to the drawings. The hot water supply system 200 is the same as the hot water supply system 100 according to the first embodiment in terms of the basic configuration and operation. Description is made hereinafter to the hot water supply system 200 according to the second embodiment referring mainly to differences from the hot water supply system 100 according to the first embodiment.

A control unit 290 principally executes boiling operation, hot water supply operation, hot water filling operation, and reheating operation. The control unit 290 includes, as a functional block, a receiver 291 and a DR control unit 292. The receiver 291, which is configured identically to the receiver 191, will not be described repeatedly.

### (1) DR control unit

The DR control unit 292 determines not to execute boiling operation when the residual hot water quantity becomes equal to or less than the first hot water quantity W1 during the first period. The first hot water quantity W1 is preliminarily stored in the storage device. The first hot water quantity W1 may be set by user operation of the remote controller 130.

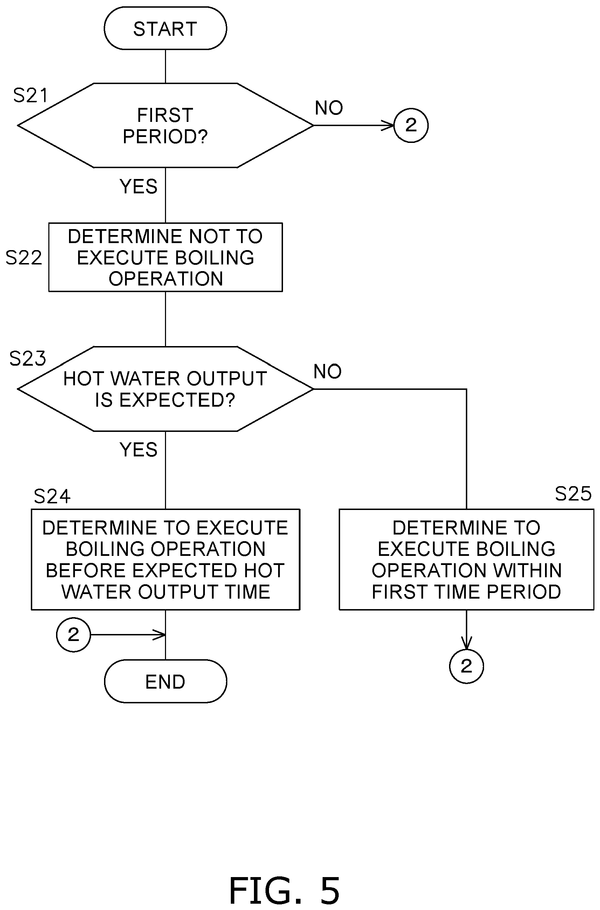

When the residual hot water quantity becomes equal to or less than the first hot water quantity, the DR control unit 292 determines expectation of boiling operation after the first period in accordance with expected hot water output as depicted in a flowchart in FIG. 5.

When the residual hot water quantity becomes equal to or less than the first hot water quantity W1, the DR control unit 292 determines whether or not the first period is ongoing (step S21). If the first period is not ongoing (NO in step S21), the DR control unit 292 does not determine whether or not to execute boiling operation. In this case, the control unit 290 ordinarily executes boiling operation.

If the first period is ongoing (YES in step S21), the DR control unit 292 determines not to execute boiling operation (step S22).

The DR control unit 292 determines whether or not hot water output is expected after the first period in accordance with the hot water output history information (step S23). The DR control unit 292 further determines whether or not hot water output is expected after the first period in accordance with the expected hot water output information (step S23).

When the DR control unit 292 determines that hot water output is expected after the first period (YES in step S23), the DR control unit 292 determines to execute boiling operation during a period after elapse of the first period until expected hot water output time (step S24). The DR control unit 292 may store the time zone for execution of boiling operation in the storage device. Time after the first period is within predetermined fourth time period from end time of the first period.

When the DR control unit 292 determines that hot water output is not expected after the first period (NO in step S23), the DR control unit 292 determines to execute boiling operation within a predetermined first time period after elapse of the first period (step S25). The DR control unit 292 may store the time zone for execution of boiling operation in the storage device. The first time period is exemplarily 30 minutes. In this case, the DR control unit 292 determines to execute boiling operation within 30 minutes after elapse of the first period.

### (2) Characteristics

(2-1)
In the hot water supply system 200 according to the present embodiment, the control unit 290 does not execute boiling operation when the heat quantity in the hot water reservoir tank 21 becomes equal to or less than the first reference value during the first period.

Such a configuration achieves suppression of power consumption by the hot water supply apparatus 1 during the first period so as to respond to the decreasing DR request.

(2-2)
In the hot water supply system 200 according to the present embodiment, the control unit 290 executes boiling operation after elapse of the first period.

Such a configuration achieves suppression of power consumption by the hot water supply apparatus 1 during the first period so as to respond to the decreasing DR request.

(2-3)
In the hot water supply system 200 according to the present embodiment, the control unit 290 executes boiling operation during the period after elapse of the first period until the expected hot water output time, when hot water output is expected after elapse of the first period.

Such a configuration achieves suppression of power consumption by the hot water supply apparatus 1 during the first period so as to respond to the decreasing DR request. Furthermore, preliminarily preparing for expected hot water output leads to enhancement of user convenience.

(2-4)
In the hot water supply system 200 according to the present embodiment, the control unit 290 executes boiling operation within the predetermined first time period after elapse of the first period.

Such a configuration achieves suppression of power consumption by the hot water supply apparatus 1 during the first period so as to respond to the decreasing DR request. Furthermore, preliminarily preparing for hot water output leads to enhancement of user convenience.

### (3) Modification examples

### (3-1) Modification example 2A

The DR control unit 292 may control not to output hot water in accordance with a hot water output command during a period after determination not to execute boiling operation until the end time of the first period.

Such a configuration achieves suppression of power consumption by the hot water supply apparatus 1 during the first period so as to respond to the decreasing DR request.

### <Third embodiment>

A hot water supply system 300 according to the third embodiment will be described with reference to the drawings. The hot water supply system 300 is the same as the hot water supply system 100 according to the first embodiment in terms of the basic configuration and operation. Description is made hereinafter to the hot water supply system 300 according to the third embodiment referring mainly to differences from the hot water supply system 100 according to the first embodiment.

A control unit 390 principally executes boiling operation, hot water supply operation, hot water filling operation, and reheating operation. The control unit 390 includes, as a functional block, a receiver 391 and a DR control unit 392. The receiver 391, which is configured identically to the receiver 191, will not be described repeatedly.

### (1) DR control unit

The DR control unit 392 controls not to execute boiling operation during the first period. However, if the DR control unit 392 determines to execute boiling operation as to be described later, boiling operation is executed.

The DR control unit 392 determines whether or not to execute boiling operation when the residual hot water quantity becomes equal to or less than the first hot water quantity W1 during the first period. The first hot water quantity W1 is preliminarily stored in the storage device. The first hot water quantity W1 may be set by user operation of the remote controller 130.

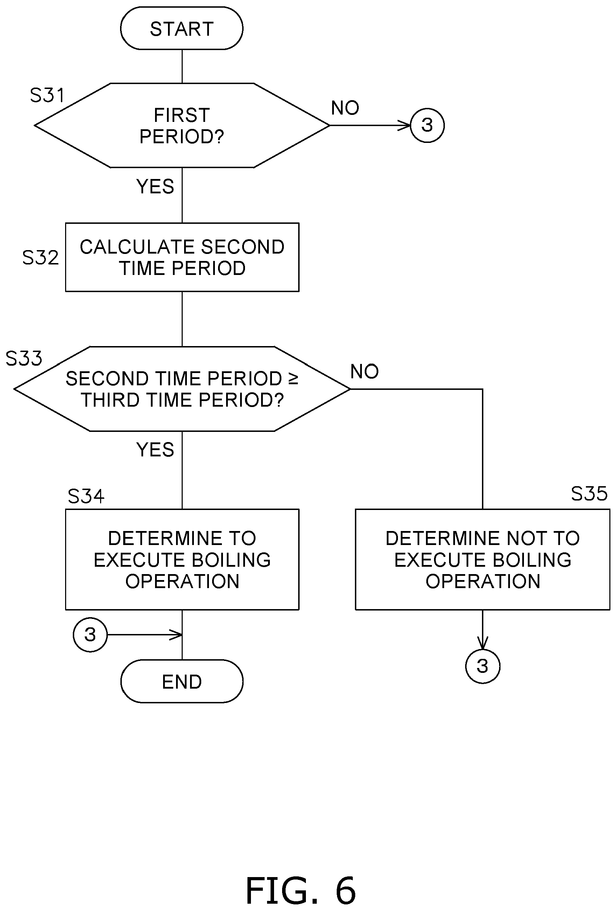

When the residual hot water quantity becomes equal to or less than the first hot water quantity W1, the DR control unit 392 determines whether or not to execute boiling operation in accordance with a second time period as depicted in a flowchart in FIG. 6.

When the residual hot water quantity becomes equal to or less than the first hot water quantity W1, the DR control unit 392 determines whether or not the first period is ongoing (step S31). If the first period is not ongoing (NO in step S31), the DR control unit 392 does not determine whether or not to execute boiling operation. In this case, the control unit 390 ordinarily executes boiling operation.

If the first period is ongoing (YES in step S31), the DR control unit 392 calculates the second time period from time when the residual hot water quantity becomes equal to or less than the first hot water quantity to the end time of the first period (step S32). The time when the residual hot water quantity becomes equal to or less than the first hot water quantity may be current time. The end time of the first period may be included in the decreasing DR request.

If the second time period is shorter than a predetermined third time period (NO in step S33), the DR control unit 392 determines not to execute boiling operation (step S35). The third time period is set by the user, and the user can wait for boiling operation during the third time period. The user can operate the remote controller 130 to input the third time period.

If the second time period is equal to or longer than the third time period (YES in step S33), the DR control unit 392 determines to execute boiling operation (step S34).

### (2) Characteristics

(2-1)
In the hot water supply system 300 according to the present embodiment, the control unit 390 determines whether or not to execute boiling operation in accordance with the second time period from the time when the residual hot water quantity becomes equal to or less than the first hot water quantity until the end time of the first period.

Determining whether or not to execute the boiling operation in accordance with a time period until the end of the decreasing DR request leads to enhancement of user convenience.

(2-2)
In the hot water supply system 300 according to the present embodiment, the control unit 390 executes boiling operation if the second time period is equal to or longer than the predetermined third time period.

Boiling operation is executed if the second time period is equal to or longer than the third time period which is the time that the user can wait for boiling operation, for enhancement of user convenience.

(2-3)
In the hot water supply system 300 according to the present embodiment, the control unit 390 does not execute boiling operation if the second time period is shorter than the predetermined third time period.

Boiling operation is not executed if the second time period is shorter than the third time period which is the time that the user can wait for boiling operation. Such a configuration achieves suppression of power consumption by boiling operation so as to respond to the decreasing DR request.

(2-4)
In the hot water supply system 300 according to the present embodiment, the third time period is set by the user.

The user can set a desired time period in such a configuration, for enhancement of user convenience.

### (3) Modification examples

### (3-1) Modification example 3A

According to the present embodiment, the DR control unit 392 determines whether or not to execute boiling operation in accordance with the second time period. Alternatively, the DR control unit 392 may determine whether or not to execute boiling operation in accordance with the second time period and the residual hot water quantity combined with each other. Still alternatively, the DR control unit 392 may determine whether or not to execute boiling operation in accordance with the second time period, the residual hot water quantity, and expected hot water output combined together.

For example, the DR control unit 392 may determine to execute boiling operation if the residual hot water quantity is less than the third hot water quantity W3 even when the second time period is shorter than the third time period.

For example, the DR control unit 392 may determine to execute boiling operation if hot water output is expected after elapse of the first period even when the second time period is shorter than the third time period.

For example, the DR control unit 392 may determine not to execute boiling operation if hot water output is not expected after elapse of the first period even when the second time period is equal to or longer than the third time period.

Such a configuration leads to further enhancement of user convenience.

### <Fourth embodiment>

A hot water supply system 400 according to the fourth embodiment will be described with reference to the drawings.

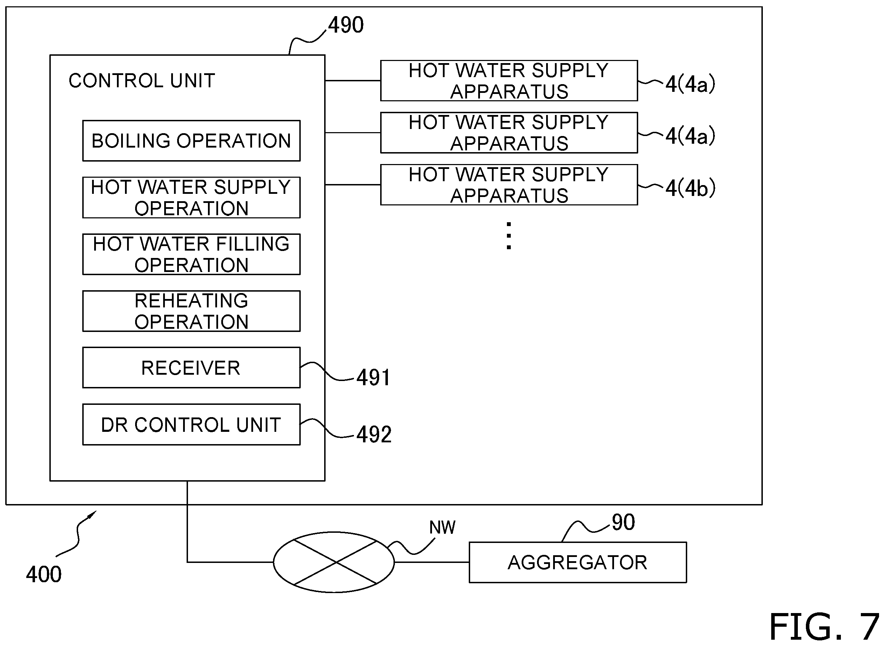

As depicted in FIG. 7, the hot water supply system 400 according to the fourth embodiment includes two or more hot water supply apparatuses 4. Each of the hot water supply apparatuses 4 is the same as the hot water supply apparatus 1 according to the first embodiment in terms of the basic configuration and operation. Description is made hereinafter to the hot water supply system 400 according to the fourth embodiment referring mainly to differences from the hot water supply system 100 according to the first embodiment.

A control unit 490 principally executes boiling operation, hot water supply operation, hot water filling operation, and reheating operation of each of the hot water supply apparatuses 4. The control unit 490 includes, as a functional block, a receiver 491 and a DR control unit 492. The receiver 491, which is configured identically to the receiver 191, will not be described repeatedly.

### (1) DR control unit

When one of the hot water supply apparatuses 4 executes boiling operation during the first period, the DR control unit 492 restricts operation of the remaining hot water supply apparatuses 4.

Specifically, the DR control unit 492 restricts the number of the hot water supply apparatuses 4 executing boiling operation during the first period. The DR control unit 492 sets a power consumption reduction target value to a value equal to or more than a target value on power consumption (reduction average value) included in the decreasing DR request. The DR control unit 492 calculates the number of the hot water supply apparatuses 4 to be restricted in accordance with the reduction target value. Information including the reduction target value associated with the number of apparatuses to be restricted may be preliminarily stored in the storage device as reference information. The DR control unit 492 may alternatively determine the number of apparatuses to be restricted in accordance with the reference information.

The DR control unit 492 stores in the storage device the number of the hot water supply apparatuses 4 having executed boiling operation during the first period. With any additional command for boiling operation of a hot water supply apparatus 4b in a state where boiling operation for hot water supply apparatuses 4a as the number of apparatuses to be restricted has already started, the DR control unit 492 determines not to execute boiling operation of the hot water supply apparatus 4b.

### (2) Characteristics

(2-1)
In the hot water supply system 400 according to the present embodiment, the control unit 490 controls the two or more hot water supply apparatuses 4. When one of hot water supply apparatuses 4 executes boiling operation during the first period, the control unit 490 restricts operation of the remaining hot water supply apparatuses 4.

Such a configuration can restrict entire power consumption of the plurality of hot water supply apparatuses 4. This achieves response to the decreasing DR request.

(2-2)
In the hot water supply system 400 according to the present embodiment, the control unit 490 sets the power consumption reduction target value to the value equal to or more than the power consumption reduction average value set in accordance with the demand response request.

Such a configuration can restrict entire power consumption of the plurality of hot water supply apparatuses 4 even when one or more hot water supply apparatuses 4 execute boiling operation. This achieves response to the decreasing DR request.

(2-3)
In the hot water supply system 400 according to the present embodiment, the control unit 490 restricts the number of the hot water supply apparatuses 4 executing boiling operation during the first period.

Such a configuration can restrict entire power consumption of the plurality of hot water supply apparatuses 4. This achieves response to the decreasing DR request.

### (3) Modification examples

### (3-1) Modification example 4A

According to the present embodiment, the DR control unit 492 restricts the number of the hot water supply apparatuses 4 executing boiling operation during the first period. Alternatively, if one of the hot water supply apparatuses 4 executes boiling operation, the DR control unit 492 may determine to execute boiling operation of the remaining hot water supply apparatuses 4 with a heating capacity less than standard heating capacity. The standard heating capacity corresponds to a heating capacity for ordinary boiling operation, and indicates a heating capacity with normal rated power utilizing commercial power (the maximum value of electric power usable in a continuously operating state at specified ambient temperature).

Such a configuration can restrict entire power consumption of the plurality of hot water supply apparatuses 4. This achieves response to the decreasing DR request.

The embodiment of the present disclosure has been described above. Various changes to modes and details will be available without departing from the object and the scope of the present disclosure recited in the patent claims.

### REFERENCE SIGNS LIST

- 1: hot water supply apparatus
- 4: hot water supply apparatus
- 21: hot water reservoir tank, tank
- 100: hot water supply system
- 190: control unit
- 200: hot water supply system
- 290: control unit
- 300: hot water supply system
- 390: control unit
- 400: hot water supply system
- 490: control unit

### CITATION LIST

### PATENT LITERATURE

Patent Literature 1: JP 2019-105984 A

## Claims

1. A hot water supply system (100, 200, 300, 400) comprising:
a tank (21); and
a control unit (190, 290, 390, 490) configured to control operation of a hot water supply apparatus (1, 4) including the tank,
wherein the control unit
receives a demand response request,
executes boiling operation of heating hot water in the tank when a heat quantity in the tank becomes equal to or less than a first reference value during a second period other than a first period set in accordance with the demand response request and provided for suppression of power consumption, and
determines whether or not to execute the boiling operation when the heat quantity in the tank becomes equal to or less than the first reference value during the first period.

2. The hot water supply system according to claim 1, wherein
the heat quantity in the tank is a residual hot water quantity in the tank, and
the first reference value is a first hot water quantity as a predetermined hot water quantity.

3. The hot water supply system according to claim 2, wherein when the control unit determines to execute the boiling operation during the first period, the control unit executes the boiling operation such that the residual hot water quantity after the boiling operation becomes equal to or more than the first hot water quantity.

4. The hot water supply system according to claim 2, wherein when the control unit determines to execute the boiling operation during the first period, the control unit executes the boiling operation such that the residual hot water quantity after the boiling operation becomes equal to or more than a second hot water quantity as an expected hot water output quantity after the first period.

5. The hot water supply system according to any one of claims 1 to 4, wherein the control unit does not execute the boiling operation when the heat quantity in the tank becomes equal to or less than the first reference value during the first period.

6. The hot water supply system according to claim 5, wherein the control unit executes the boiling operation after elapse of the first period.

7. The hot water supply system according to claim 5 or 6, wherein the control unit executes the boiling operation during a period after elapse of the first period until expected hot water output time, when hot water output is expected after elapse of the first period.

8. The hot water supply system according to any one of claims 5 to 7, wherein the control unit executes the boiling operation within a predetermined first time period after elapse of the first period.

9. The hot water supply system according to any one of claims 5 to 8, wherein the control unit does not output hot water in accordance with a hot water output command during a period after determination not to execute the boiling operation until end time of the first period.

10. The hot water supply system according to claim 2, wherein the control unit executes the boiling operation when the residual hot water quantity is equal to or less than a third hot water quantity less than the first hot water quantity.

11. The hot water supply system according to claim 10, wherein the control unit suppresses the boiling operation when the residual hot water quantity is more than the third hot water quantity and is equal to or less than the first hot water quantity.

12. The hot water supply system according to any one of claims 2, 3, 4, 10, and 11, wherein the control unit determines whether or not to execute the boiling operation in accordance with a second time period from time when the residual hot water quantity becomes equal to or less than the first hot water quantity to end time of the first period.

13. The hot water supply system according to claim 12, wherein the control unit executes the boiling operation when the second time period is equal to or longer than a predetermined third time period.

14. The hot water supply system according to claim 12, wherein the control unit does not execute the boiling operation when the second time period is shorter than a predetermined third time period.

15. The hot water supply system according to claim 13 or 14, wherein the third time period is set by a user.

16. The hot water supply system according to any one of claims 1 to 15, wherein
the control unit
controls operation of two or more of the hot water supply apparatuses, and
restricts operation of remaining hot water supply apparatuses when one of the hot water supply apparatuses executes the boiling operation during the first period.

17. The hot water supply system according to any one of claims 1 to 16, wherein the control unit sets a power consumption reduction target value to a value equal to or more than a power consumption reduction average value set in accordance with the demand response request.

18. The hot water supply system according to any one of claims 1 to 17, wherein the control unit restricts a number of the hot water supply apparatuses executing the boiling operation during the first period.
